# EUROPÄISCHE PATENTANMELDUNG

(11) **EP 3 173 387 A1**
(43) Veröffentlichungstag der Anmeldung: **31.05.2017**
(21) Anmeldenummer: 16192669.6
(22) Anmeldetag: 06.10.2016
(51) Int. Cl.: C03B 19/10, C04B 14/12, C04B 14/24, C04B 38/00, C04B 20/06, C03B 5/12

(54) **VERFAHREN UND ANLAGE ZUR HERSTELLUNG VON MONO- ODER MULTIZELLULÄR EXPANDIERTEN PARTIKELN AUS EINEM GLASARTIGEN ODER KERAMISCHEN MATERIAL**

(30) Priorität: 26.11.2015 DE 102015223376
(71) Anmelder: DENNERT PORAVER GmbH, 92353 Postbauer-Heng (DE)
(72) Erfinder: DENNERT, Hans Veit, 96132 Schlüsselfeld (DE)
(74) Vertreter: FDST Patentanwälte

(57) **Zusammenfassung**

Zur Herstellung von mono- oder multizellulär expandierten Partikeln (B) aus einem glasartigen oder keramischen Material werden Brenngutpartikel (R) aus einem nicht-expandierten Ausgangsmaterial in eine Brennkammer (4) eines Brennofens (2) eingegeben und unter Wirkung eines pulsierenden Heißgasstroms (H) expandiert. Zur Erzeugung einer Druckpulsation in dem Heißgasstrom (H) wird dabei ein Pulsationsventil (19) herangezogen, das in einer unmittelbar oder mittelbar mit der Brennkammer (4) verbundenen Luft- oder Gaszuleitung (17,24) angeordnet ist.

## Beschreibung

Die Erfindung bezieht sich auf ein Verfahren zur Herstellung von mono- oder multizellulär expandierten Partikeln aus einem glasartigen oder keramischen Material, insbesondere aus Glas, Perlit, gebranntem Ton oder einem anderen Keramikwerkstoff. Insbesondere bezieht sich die Erfindung dabei auf die Herstellung von expandierten Mikropartikeln, also Partikeln mit einem Partikeldurchmesser im Sub-Millimeterbereich (ca. 1 Mikrometer bis 1.000 Mikrometer). Die Erfindung bezieht sich weiterhin auf eine Anlage zur Durchführung des Verfahrens.

Als "expandierte Partikel" werden dabei solche Partikel bezeichnet, die einen oder mehrere durch einen Expansionsprozess (Blähprozess) entstandene Hohlräume einschließen. In monozellulär expandierten Partikeln ist dabei zumindest im Wesentlichen das gesamte Hohlvolumen des Partikels durch einen einzigen Hohlraum gebildet. Solche monozellulär expandierten Partikel liegen meist in Form von Hohlkugeln vor, deren Wand typischerweise aus Glas gebildet ist. Bei multizellulär expandierten Partikeln, wie z.B. Blähglas, Blähton oder expandierten Perliten ist das Hohlvolumen des jeweiligen Partikels aus einer Vielzahl von Hohlräumen gebildet. Multizellulär expandierte Partikel haben somit die Form eines erstarrten Schaums mit einer sphärischen oder unregelmäßig geformten Außenkontur.

Mono- oder multizellulär expandierte Partikel aus glasartigem oder keramischem Material werden vielfach als Leichtzuschlagstoffe in Kompositmaterialien und Leichtbeton eingesetzt. Des Weiteren finden expandierte Mikropartikel unter anderem Verwendung in der Medizin sowie der Verbrauchsgüterindustrie.

Sowohl Glas-Hohlkugeln als auch multizellulär expandierte Mikropartikel werden üblicherweise in direkt befeuerten Vertikalöfen (auch als Schachtöfen bezeichnet) hergestellt. In einem in US 3,230,064 A beschriebenen Verfahren wird beispielsweise zur Herstellung von Glas-Hohlkugeln durch Befeuerung mittels eines Brenners in einer Brennkammer des Vertikalofens eine aufwärts gerichtete heiße Gasströmung erzeugt. Im Bereich des Brenners wird kontinuierlich ein Brenngut eingebracht, das aus mit einem Treibmittel versetzten Glaspartikeln besteht. In der heißen Gasströmung werden die Glaspartikel einerseits aufgeschmolzen. Des Weiteren wird durch das Treibmittel in den aufgeschmolzenen Glaspartikeln Gas erzeugt, durch welches die Glaspartikel zu den gewünschten Hohlkugeln aufgebläht (expandiert) werden. Aufgrund ihrer dann erniedrigten Dichte schwimmen die Hohlkugeln in der Gasströmung auf und werden zusammen mit den Abgasen der Befeuerung durch einen am oberen Ende des Vertikalofens angeordneten Gasaustritt aus der Brennkammer ausgetragen. Die ausgetragenen Hohlkugeln werden gemäß US 3,230,064 A in einem dem Vertikalofen nachgeschalteten Zyklon-Abscheider oder einem Sackfilter von der Gasströmung getrennt. Ein ähnlicher Vertikalofen ist in US 2,421,902 A zur Herstellung von expandierten Perlit-Partikeln offenbart.

Des Weiteren ist beispielsweise aus US 2009/0280328 A1, US 2007/0275335 A1 sowie US 5,002,696 A bekannt, die als Ausgangsmaterial für die Herstellung der Mikrohohlkugeln verwendeten Glaspartikel kontinuierlich von oben in eine abwärts gerichtete, heiße Gasströmung einzubringen, so dass die Glaspartikel mit dieser Gasströmung nach unten fallen und hierbei expandiert werden.

Andererseits wird in EP 1 183 215 B1 vorschlagen, zur Herstellung von Schaumglasgranulaten, mithin multizellulär expandierten Partikeln aus Glas, einen sogenannten Pulsationsreaktor einzusetzen. Der Pulsationsreaktor umfasst in üblicher Weise eine Verpuffungskammer (Schmidt-Rohr) und ein daran anschließendes Resonanzrohr, das einen gegenüber der Verpuffungskammer wesentlich reduzierten Strömungsquerschnitt aufweist. In die Verpuffungskammer wird ein Brenngas-Primärluft-Gemisch eingeleitet. Durch Entzündung dieses Gemischs in der Verpuffungskammer und die hierdurch verursachte Verpuffung wird eine Druckwelle in dem Resonanzrohr erzeugt. Diese verursacht wiederum einen Unterdruck in der Verpuffungskammer, wodurch erneut Brenngas und Primärluft in die Verpuffungskammer eingesaugt werden. Durch erneute Entzündung entstehen so eine pulsierende Verbrennung und eine pulsierende Heißgasströmung in dem Resonanzrohr.

Der Pulsationsreaktor ist im Vergleich zu üblichen Vertikalöfen kompakt und unaufwändig realisierbar und ermöglicht infolge der in dem Resonanzrohr erzeugten Druckpulsation eine Effizienzsteigerung des Expansionsprozesses, insbesondere eine Absenkung der für den Expansionsprozess benötigten Expansionstemperatur. Nachteilig ist allerdings, dass sich die Prozessparameter, insbesondere die Temperatur in dem Pulsationsrohr und die Frequenz und Stärke der Druckpulse, nur in eingeschränktem Maße steuern lassen.

Der Erfindung liegt die Aufgabe zugrunde, mit einfachen Mitteln eine effiziente sowie einfach und präzise steuerbare Herstellung von mono- oder multizellulär expandierten Mikropartikeln aus einem glasartigen oder keramischen Material zu ermöglichen.

Bezüglich eines Verfahrens zur Herstellung von mono- oder multizellulär expandierten Partikeln (insbesondere Mikropartikeln) aus einem glasartigen oder keramischen Material wird diese Aufgabe erfindungsgemäß gelöst durch die Merkmale des Anspruchs 1. Bezüglich einer Anlage zur Herstellung von mono- oder multizellulär expandierten Partikeln (insbesondere Mikropartikeln) aus einem glasartigen oder keramischen Material wird diese Aufgabe erfindungsgemäß gelöst durch die Merkmale des Anspruchs 7. Vorteilhafte und teils für sich gesehen erfinderische Ausgestaltungen und Weiterentwicklungen der Erfindung sind in den Unteransprüchen und der nachfolgenden Beschreibung dargelegt.

Verfahrensgemäß werden Brenngutpartikel aus einem nicht-expandierten Ausgangsmaterial in eine Brennkammer eines Brennofens eingegeben und dort unter Wirkung eines pulsierenden Heißgasstroms (also eines Heißgasstroms mit zeitlich pulsartig schwankendem Gasdruck) expandiert. Zur Erzeugung der Druckpulsation in dem Heißgasstrom wird dabei erfindungsgemäß ein Pulsationsventil herangezogen, das in einer der Brennkammer strömungstechnisch vorgeschalteten Luft- oder Gaszuleitung (nachfolgend kurz als "Zuleitung" bezeichnet) angeordnet ist.

Als Pulsationsventil wird dabei allgemein ein Bauteil bezeichnet, das den Strömungsquerschnitt der genannten Zuleitung pulsierend verengt und erweitert, so dass ein pulsartig variierender Staudruck erzeugt wird.

Das Pulsationsventil kann hierbei im Rahmen der Erfindung unmittelbar vor der Brennkammer in dem bereits vollständig aufgeheizten Heißgasstrom angeordnet sein. Vorzugsweise ist das Pulsationsventil aber mit Abstand zu der Brennkammer in einem Kalt- oder Warmluftstrom angeordnet, aus dem stromabwärts des Pulsationsventils (somit nach Durchlaufen des Pulsationsventils) durch weitere Aufheizung - insbesondere mittels eines oder mehrerer Brenner - der Heißgasstrom erzeugt wird.

Das Pulsationsventil kann im Rahmen der Erfindung als einziges und ausschließliches Mittel zur Erzeugung der Druckpulsation in dem Heißgasstrom vorgesehen sein. Im Rahmen der Erfindung kann das Pulsationsventil alternativ aber auch als eines von mehreren Mitteln zur Erzeugung der Druckpulsation vorgesehen sein, und mit den anderen Mitteln (z.B. einer pulsartigen Verbrennung oder einer gepulsten Förderung) zur Verstärkung der Druckpulsation zusammenwirken.

Die erfindungsgemäße Anlage zur Durchführung des Verfahrens umfasst entsprechend den Brennofen, in dessen Brennkammer der pulsierende Heißgasstrom erzeugbar ist. Die Anlage umfasst weiterhin eine Beschickungseinrichtung, mittels der die Brennkammer mit den zu expandierenden Brenngutpartikeln beschickbar ist, sowie die Zuleitung, die zur Bildung des Heißgasstroms mit der Brennkammer verbunden ist, und in der das vorstehend beschriebene Pulsationsventil angeordnet ist. Die Anlage ist somit zur Durchführung des erfindungsgemäßen Verfahrens, insbesondere in einer der nachstehend beschriebenen Verfahrensvarianten, eingerichtet.

Erkanntermaßen ermöglicht das Pulsationsventil auf effiziente und hinsichtlich Frequenz und Intensität gezielt steuerbare Weise die Erzeugung einer Druckpulsation in dem Heißgasstrom. Erfindungsgemäß lässt sich somit mit besonders einfachen Mitteln eine besonders hohe Effizienz des von dem Heißgasstrom getriebenen Expansionsprozesses erzielen.

Vorzugsweise umfasst das Pulsationsventil eine Pulsationsdrehscheibe. Die Pulsationsdrehscheibe ist hierbei durch eine innerhalb der Zuleitung angeordnete Scheibe oder Platte gebildet, die um eine quer zu einer Achse der Zuleitung ausgerichtete (und zur Scheibenebene parallele) Drehachse drehangetrieben ist. Unter Drehung der Pulsationsdrehscheibe wird hierbei der Strömungsquerschnitt innerhalb der Zuleitung periodisch variiert, d.h. alternierend verengt und aufgeweitet.

Vorzugsweise wird ein mittels des Pulsationsventils erzeugter, pulsierender (Kaltoder Warm-)Luftstrom zur Erzeugung des Heißgasstroms (also zur weiteren Aufheizung) einem Brenner zugeführt. Der Brenner ist vorzugsweise innerhalb der Brennkammer angeordnet, so dass die Brennerflamme direkt in die Brennkammer schlägt. Alternativ hierzu ist der Brenner außerhalb der Brennkammer angeordnet, so dass die Brennkammer nicht direkt beflammt wird, und nur das von der Brennerflamme erhitzte Heißgas in die Brennkammer eingeleitet wird.

Der mittels des Pulsationsventils erzeugte, pulsierende Luftstrom enthält vorzugsweise Luft, die dem Brenner als Primärluft zugeführt wird. Die Primärluft wird hierbei mit einem flüssigen oder gasförmigen Brennstoff (insbesondere Erdgas) zu einem stöchiometrischen Verbrennungsgemisch gemischt, das im Brenner entzündet wird.

Alternativ hierzu enthält der mittels des Pulsationsventils erzeugte, pulsierende (Kalt- oder Warm-)Luftstrom Luft, die dem Brenner als Sekundärluft zugeführt wird. Als Sekundärluft werden überstöchiometrische Luftanteile bezeichnet, die nach Entzündung des aus Primärluft und Brennstoff gebildeten Verbrennungsgemischs zur Erhöhung des Volumenstroms und/oder zur Einstellung eines gewünschten Temperaturprofils des Heißgasstroms in den Brenner eingespeist werden. Wiederum alternativ hierzu kann der mittels des Pulsationsventils erzeugte, pulsierende (Kalt- oder Warm-)Luftstrom im Rahmen der Erfindung aber auch neben dem Brenner (also außerhalb des Brenners) in die Brennkammer eingeleitet werden.

Vorzugsweise ist der Brennofen doppelwandig ausgebildet, so dass zwischen einer inneren Ofenwand (Brennkammermantel) und einer den Brennkammermantel umgebenden Außenwand ein Kühlspalt gebildet ist. Zur Kühlung des Brennkammermantels wird in diesen Kühlspalt Kühlluft (insbesondere Kaltluft) eingeleitet. Die durch Wärmeaustausch mit dem Brennkammermantel aufgewärmte Kühlluft wird über eine Luftzuleitung aus dem Kühlspalt abgeleitet, um diese aufgewärmte Kühlluft unmittelbar oder mittelbar dem Brennofen - nach weiterer Aufheizung - als Heißgasstrom oder Teil des desselben zuzuleiten. Das Pulsationsventil ist dabei vorzugsweise in dieser Luftzuleitung angeordnet.

In bevorzugter Ausführung der Erfindung wird als Brennofen ein Vertikalofen herangezogen, bei dem die Brennkammer eine langgestreckte, hinsichtlich ihrer Längsausdehnung vertikal ausgerichtete Geometrie aufweist. Die vertikale Ausrichtung der Brennkammer hat den Vorteil, dass sowohl die Strömungsrichtung des Heißgasstroms als auch die Schwerkraft parallel zu der Längserstreckung der Brennkammer ausgerichtet sind. Mithin sind die quer zu der Brennkammerwand auf die zu expandierenden und expandierten Partikel wirkenden Kraftkomponenten, die ein Verkleben dieser Partikel mit der Brennkammerwand fördern würden, besonders gering. Vorzugsweise wird der Heißgasstrom dabei derart erzeugt, dass er die Brennkammer von unten nach oben durchläuft.

Nachstehend werden Ausführungsbeispiele der Erfindung anhand einer Zeichnung näher erläutert. Darin zeigen:
- Fig. 1: in schematischer Darstellung eine Anlage zur Herstellung von multizellulär expandierten Mikropartikeln aus Glas (Blähglas-Mikropartikeln), mit einem durch einen Brenner befeuerten Vertikalofen, wobei dem Brenner als Primärluft ein pulsierender Luftstrom zugeführt ist, dessen Druckpulsation durch ein in einer Primärluftleitung angeordnetes Pulsationsventil erzeugt wird,
- Fig. 2: in schematisch vereinfachter, teilgeschnittener Darstellung in größerem Detail einen Ausschnitt der Primärluftleitung und das darin angeordnete Pulsationsventil,
- Fig. 3: in Darstellung gemäß Fig. 1 eine alternative Ausführungsform der dortigen Anlage, und
- Fig. 4: in weiter vereinfachter Darstellung eine weitere Ausführungsform der Anlage gemäß Fig. 1.

Einander entsprechende Teile und Größen sind in allen Figuren stets mit gleichen Bezugszeichen versehen.

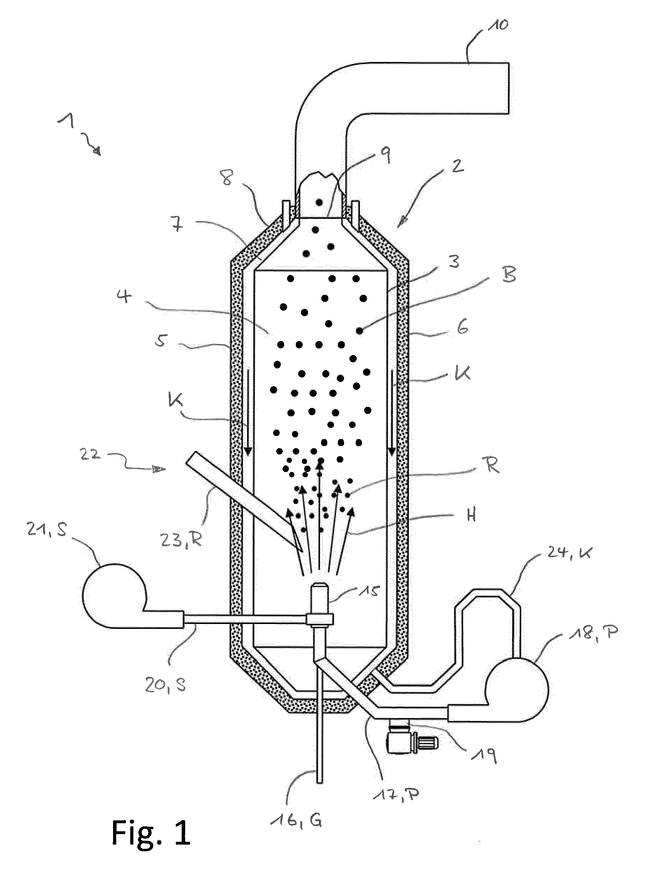

Fig. 1 zeigt in grober schematischer Vereinfachung eine Anlage 1 zur Herstellung von multizellulär expandierten (also schaumartigen) Mikropartikeln aus Glas, die nachfolgend als Blähglaspartikel B bezeichnet sind. Die mittels der Anlage 1 herzustellenden Blähglaspartikel B weisen eine weitgehend geschlossene, sphärische Außenkontur auf, deren typischer Durchmesser 1 Millimeter unterschreitet und insbesondere in einem Bereich zwischen 0,01 bis 0,5 Millimeter liegt. Hinsichtlich ihrer inneren Struktur weisen die Blähglaspartikel B eine Glas-Matrix auf, die eine Vielzahl von weitgehend geschlossenen (also miteinander unverbundenen) Hohlräumen umschließt.

Zentraler Bestandteil der Anlage 1 ist ein Vertikalofen 2. Der Vertikalofen 2 umfasst einen im Wesentlichen hohlzylindrischen, umlaufenden Brennkammermantel 3 aus hochtemperaturfestem Stahl, der eine schachtartig langgestreckte, hinsichtlich ihrer Längserstreckung vertikal ausgerichtete Brennkammer 4 umgibt. In beispielhafter Dimensionierung weisen der Vertikalofen 2 und die darin ausgebildete Brennkammer 4 eine Höhe von etwa 5 bis 15 Meter auf.

Der Vertikalofen 2 umfasst des Weiteren eine Außenwand 5, die den Brennkammermantel 3 (bezüglich der vertikalen Achse des Vertikalofens 2) koaxial umgibt, und die vorzugsweise ebenfalls aus Stahl gebildet ist. An einer dem Brennkammermantel 3 zugekehrten Innenseite der Außenwand 5 ist eine thermische Isolierung 6 angebracht. Die Isolierung 6 füllt den zwischen dem Brennkammermantel 3 und der Außenwand 5 gebildeten Zwischenraum nur teilweise aus, so dass zwischen dem Brennkammermantel 3 und der Isolierung 6 ein den Brennkammermantel 3 unmittelbar ringförmig umgebender Freiraum gebildet ist. Dieser Freiraum zwischen dem Brennkammermantel 3 und der Isolierung 6 wird im Betrieb der Anlage 1 von Kühlluft K durchströmt und ist deshalb nachfolgend auch als Kühlspalt 7 bezeichnet.

An seinem oberen Ende wird der Brennkammermantel 3 durch eine kegelstumpfförmige (oder alternativ gewölbte) Kuppel 8 abgeschlossen, die in einen Gasaustritt 9 mündet. An den Gasaustritt 9 des Vertikalofens 2 schließt eine Ofenabgasleitung 10 an, in der ein (nicht dargestellter) Feststoffabscheider, beispielsweise ein Zyklon-Abscheider oder ein Filter angeordnet ist. Optional ist dem Gasaustritt 9 und dem Feststoffabscheider eine (nicht dargestellte) Kühlfalle zwischengeschaltet, in der die aus der Brennkammer 4 ausgetragenen Blähglaspartikel B schlagartig durch Zumischung von Kaltluft auf Temperaturen unterhalb der Klebetemperatur des Glasmaterials abgekühlt werden.

Im Betrieb der Anlage 1 wird innerhalb der Brennkammer 4 ein Heißgasstrom H erzeugt, der die Brennkammer 4 von unten nach oben durchströmt. Zur Erzeugung dieses Heißgasstroms H umfasst die Anlage 1 einen Brenner 15, der in einem unteren Bereich der Brennkammer 4 angeordnet ist, und mit dem die Brennkammer 4 direkt befeuert ist. Der Brenner 15 ist mit einem Brenngas G, insbesondere Erdgas, betrieben. Das Brenngas G wird dem Brenner 15 über eine Brenngasleitung 16 zugeführt.

Zur Erzeugung eines Verbrennungsgemischs ist der Brenner 15 an eine Primärluftleitung 17 angeschlossen, über die dem Brenner 15 mittels eines (Primärluft-) Gebläses 18 ein Primärluftstrom P zugeführt wird. In der Primärluftleitung 17 ist ein nachstehend näher beschriebenes Pulsationsventil 19 angeordnet.

Des Weiteren ist an den Brenner 15 eine Sekundärluftleitung 20 angeschlossen, über die dem Brenner 15 mittels eines (Sekundärluft-)Gebläses 21 ein Sekundärluftstrom S zugeführt wird.

Zudem umfasst die Anlage 1 eine (nur andeutungsweise dargestellte) Beschickungseinrichtung 22, mit der zu expandierende Brenngutpartikel R aus einem nachfolgend näher beschriebenen, nicht-expandierten Ausgangsmaterial in die Brennkammer 4 eingebracht werden können.

Die Beschickungseinrichtung 22 umfasst eine Brenngutleitung 23, die in einem unteren Bereich des Vertikalofens 2 durch den Brennkammermantel 3 hindurch in die Brennkammer 4 hineingeführt ist. Die Brenngutleitung 23 ist aus einem (nicht dargestellten) Brenngutreservoir, beispielsweise einem Silo, mit den zu expandierenden Brenngutpartikeln R gespeist und verläuft in Beschickungsrichtung (d.h. in Richtung auf die Brennkammer 4) fallend, so dass die Brenngutpartikel R ohne aktive Förderung (lediglich unter Wirkung der Schwerkraft) in die Brennkammer 4 rutschen. Optional kann die Beschickungseinrichtung 22 allerdings auch mit Mitteln zur aktiven Förderung der Brenngutpartikel R versehen sein, beispielsweise mit einem Druckluftsystem zum Einblasen der Brenngutpartikel R oder einer Förderschnecke.

Zur Herstellung der Brenngutpartikel R werden zunächst in an sich herkömmlicher Weise Ausgangsstoffe umfassend Altglasmehl, Wasserglas sowie Blähmittel (z.B. Natronsalpeter) unter Zugabe von warmem Wasser zu einem homogenen Schlicker verrührt. Der Schlicker wird anschließend z. B. in einem Sprühturm granuliert. Die aus dem Granulierprozess resultierenden Brenngutpartikel R werden anschließend getrocknet und in dem Brenngutreservoir für den im Folgenden beschriebenen Expansionsprozess zwischengelagert.

Für den in dem Vertikalofen 2 durchgeführten Expansionsprozess wird zunächst durch den Brenner 15 der darin aufsteigende Heißgasstrom H erzeugt. Durch das in der Primärluftleitung P angeordnete Pulsationsventil 19 wird hierbei dem Primärluftstrom P eine Druckpulsation (d.h. ein zeitlich pulsartig variierender Druckverlauf) aufprägt, wobei sich diese Druckpulsation auf den von dem Brenner 15 ausgestoßenen Heißgasstrom H überträgt.

Sobald der Heißgasstrom H eine vorgegebene Expansionstemperatur (die für die Herstellung der Blähglaspartikel B vorzugsweise ca. 800° C beträgt) erreicht hat, werden über die Beschickungsleitung 23 kontinuierlich Brenngutpartikel R in die Brennkammer 4 eingegeben. Durch den pulsierenden Heißgasstrom H werden die Brenngutpartikel R hierbei zumindest teilweise aufgeschmolzen, wobei die Brenngutpartikel R durch Gasbildung des in dem Ausgangsmaterial enthaltenen Treibmittels zu den gewünschten Blähglaspartikeln B aufgebläht (expandiert) werden. Die Druckpulsation des Heißgasstroms H fördert dabei einerseits den Expansionsprozess und verhindert andererseits ein Verkleben der aufgeschmolzenen Brenngutpartikel R und Blähglaspartikel B. Die expandierten Blähglaspartikel B werden (zusammen mit einem Rest nicht-expandierter Brenngutpartikel R) mit dem Heißgasstrom H mitgerissen und somit durch den Gasaustritt 9 und die daran anschließenden Ofenabgasleitung 10 aus der Brennkammer 4 ausgetragen.

In dem in der Ofenabgasleitung 10 angeordneten Feststoffabscheider werden die Blähglaspartikel B von dem Abgas getrennt. Die ausgeschiedenen Blähglaspartikel B werden von mit ausgetragenen, nicht-expandierten Brenngutpartikeln R (Schlechtpartikeln) getrennt und einem (nicht dargestellten) Produktreservoir, beispielsweise einem Silo zugeführt. Der gefilterte Abgasstrom wird an die Umgebung ausgestoßen oder einer weiteren Abgasbehandlung zugeführt. Insbesondere wird hierbei vorzugsweise ein Teil der in dem Abgas enthaltenen Restwärme als Nutzwärme für den Herstellungsprozess rückgewonnen.

Zur Optimierung der Brennerleistung wird der Primärluftstrom P dem Brenner 15 in - beispielsweise auf ca. 600°C - vorgeheiztem Zustand zugeführt. Hierfür wird dem Primärluftgebläse 18 die aufgeheizte Kühlluft K aus dem Kühlspalt 7 des Vertikalofens 2 zugeführt, die über eine Warmluftleitung 24 aus einem unteren Bereich des Kühlspalts 7 abgezogen wird. Optional wird der aufgeheizten Kühlluft K kalte (oder anderweitig vorgeheizte) Außenluft zugemischt.

Als Sekundärluftstrom S wird dem Brenner 15 wahlweise kalte oder ebenfalls vorgewärmte Außenluft zugeleitet. Die Flussrate des Sekundärluftstroms S wird - in Abstimmung mit der Brennerleistung derart eingestellt, dass die Temperatur und die Flussrate des Heißgasstroms H in der Brennkammer 4 an vorgegebene Sollwerte angeglichen werden.

Um ein Verkleben der Brenngutpartikel R und der daraus während des Expansionsprozesses entstehenden Blähglaspartikel B zu unterdrücken, wird vorzugsweise zusätzlich zu den Brenngutpartikeln R ein Trennmittel, z.B. Kaolin, in die Brennkammer 4 eingegeben. Das Trennmittel wird zusammen mit den Brenngutpartikeln R über die Beschickungseinrichtung 22 in die Brennkammer 4 eingeführt und/oder über den Brenner 15 (insbesondere zusammen mit dem Sekundärluftstrom S) in die Brennkammer 4 eingeblasen. Zusätzlich oder alternativ wird das Trennmittel neben dem Brenner 15 in die Brennkammer 4 eingeblasen.

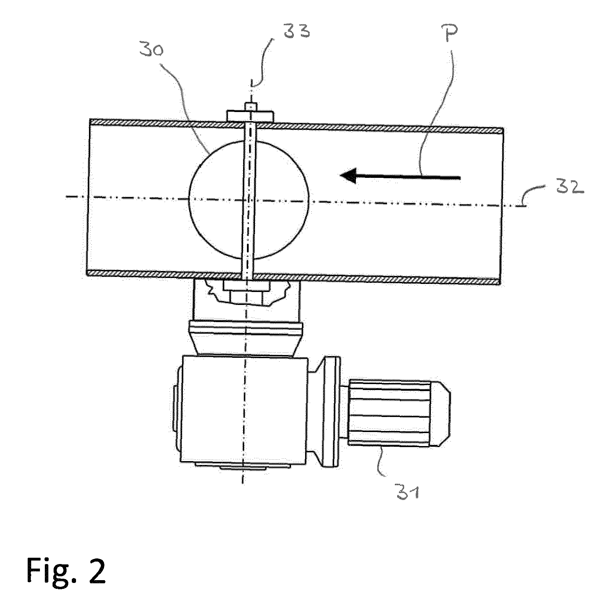

Gemäß Fig. 2 umfasst das Pulsationsventil 19 eine Pulsationsdrehscheibe 30. Die Pulsationsdrehscheibe 30 ist durch eine kreisförmige Scheibe gebildet, die innerhalb der Primärluftleitung 17 angeordnet ist, und die einen den Innendurchmesser der Primärluftleitung 17 geringfügig unterschreitenden Durchmesser aufweist. In zweckmäßiger Ausführung beträgt der Durchmesser der Pulsationsdrehscheibe 30 etwa 70% bis 95% (z.B. 85%) des Innendurchmessers der Primärluftleitung 17.

Im Betrieb der Anlage 1 wird die Pulsationsdrehscheibe 30 mittels eines Elektromotors 31 um eine quer zu einer Achse 32 der Primärluftleitung 17 ausgerichtete (und zur Scheibenebene parallele) Drehachse 33 drehangetrieben. Durch die Pulsationsdrehscheibe 30 wird der Strömungsquerschnitt innerhalb der Primärluftleitung 17 periodisch verengt und aufgeweitet, wodurch ein pulsartig variierender Staudruck erzeugt wird. Dieser variierende Staudruck pflanzt sich als Druckpulsation innerhalb der Primärluftleitung 17 und über den Brenner 15 bis in die Brennkammer 4 fort.

Durch Variation der Drehzahl der Pulsationsdrehscheibe 30 und durch Variation der Leistung des Primärluftgebläses 18 (und somit der Volumenflussrate des Primärluftstroms P) werden die Frequenz bzw. die Intensität der Druckpulse eingestellt. Die Intensität der Druckpulse wird weiterhin durch die Dimensionierung der Pulsationsdrehscheibe 30 in Relation zu dem Innendurchmesser der Primärluftleitung 17 eingestellt.

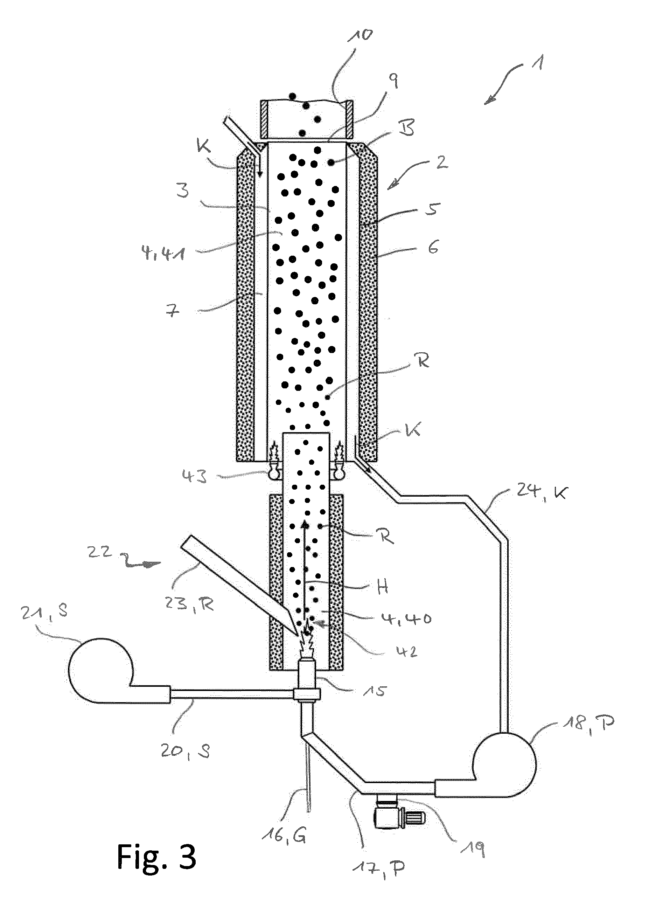

Fig. 3 zeigt eine alternative Ausführung der Anlage 1, die mit Ausnahme der nachfolgend beschriebenen Unterschiede der Anlage 1 gemäß Fig. 1 entspricht.

Im Unterschied zu letzterer ist der Vertikalofen 2 in der Ausführung gemäß Fig. 3 in zwei vertikal aneinandergrenzende Abschnitte gegliedert, nämlich in einen (nachfolgend als "Vorstufe 40" bezeichneten) unteren Abschnitt, in dem die Brennkammer 4 einen vergleichsweise kleinen Durchmesser hat, sowie in einen (nachfolgend als "Brennstufe 41" bezeichneten) oberen Abschnitt, in dem die Brennkammer 4 einen gegenüber der Vorstufe 40 verbreiterten Durchmesser aufweist.

Die Vorstufe 40 und die Brennstufe 41 sind hierbei mechanisch unverbunden, so dass zwischen diesen beiden Teilen des Vertikalofens 2 ein zur Umgebung offener Ringspalt gebildet ist. Die Brennstufe 41 ist ferner auch von der Ofenabgasleitung 10 mechanisch getrennt. Die mechanische Trennung der Brennstufe 41 von der Vorstufe 40 ermöglicht vorteilhafterweise das Einströmen von weiterer Sekundärluft in die Brennkammer 4. Zudem wird die Ausbildung von Spannungen zwischen diesen Bauteilen infolge unterschiedlicher thermischer Ausdehnung verhindert. Durch die mechanische Trennung der Brennstufe 41 von der Vorstufe 40 und von der Ofenabgasleitung 10 werden ferner die Reparatur und Wartung der Anlage 1 erheblich vereinfacht.

Die Brenngutleitung 23 der Beschickungseinrichtung 22 mündet bei der Anlage 1 gemäß Fig. 3 im Bereich der Vorstufe 40 in die Brennkammer 4. Der Ort, an dem die Brenngutleitung 23 in die Brennkammer 4 mündet, ist hierbei als Brennguteintritt 42 bezeichnet.

Der Brenner 15 ist an dem unteren Ende der Vorstufe 40 angeordnet. Zusätzlich zu dem Brenner 15 weist der Vertikalofen 2 in der Ausführung gemäß Fig. 3 einen weiteren Brenner auf. In der Ausführung gemäß Fig. 3 ist dieser weitere Brenner in Form eines die Brennkammer 4 umgebenden Brenngas-Ringverteilers 43 ausgebildet, der an seiner Oberseite mit einer Vielzahl von Brenngas-Ausblasöffnungen versehen ist. Im Betrieb der Anlage 1 bildet sich an diesen Brenngas-Ausblasöffnungen ein ringförmiger Flammenkranz, durch den der Heißgasstrom H in der Brennkammer 4 auf die vorgegebene Expansionstemperatur aufgeheizt wird.

Anstelle des Brenngas-Ringverteilers 43 sind in einer (nicht explizit dargestellten) Variante des Vertikalofens 2 eine Anzahl von (beispielsweise sechs) separaten Brennern vorgesehen, die kranzartig um den Umfang der Brennkammer 4 verteilt angeordnet sind. Der Brenngas-Ringverteiler 43 hat gegenüber mehreren einzelnen Brennern allerdings den Vorteil, dass er die Druckpulsation in dem Heißgasstrom H nur in besonders geringem Maß beeinträchtigt.

Der Brenngas-Ringverteiler 43 ist an dem Übergang zwischen der Vorstufe 40 und der Brennstufe 41 angeordnet. Der Brenngas-Ringverteiler 43 ist dem Brennguteintritt 42 somit in Strömungsrichtung des Heißgasstroms H nachgeschaltet und liegt mit Abstand über dem Brennguteintritt 42.

Im Betrieb der Anlage 1 wird der Heißgasstrom H im Bereich der Vorstufe 40 durch den Brenner 15 zunächst derart erzeugt, dass er an dem Brennguteintritt 42 eine Temperatur aufweist, die knapp unterhalb der Erweichungstemperatur (Littleton-Punkt) der Brenngutpartikel R liegt. Bei einer beispielhaften Erweichungstemperatur von ca. 700 °C des Ausgangsmaterials der Brenngutpartikel R wird der Heißgasstrom H beispielsweise derart eingestellt, dass er an dem Brennguteintritt 42 eine Temperatur von ca. 650 °C aufweist. Die Brenngutpartikel R werden somit nach dem Einbringen in die Brennkammer 4 nur auf die Temperatur des Heißgasstroms H aufgeheizt, aber noch nicht angeschmolzen. Hierdurch wird ausgeschlossen, dass die Brenngutpartikel R in der Vorstufe 40 miteinander, mit der Beschickungseinrichtung 22 oder mit dem Brennkammermantel 3 verkleben.

Durch den Brenngas-Ringverteiler 43 wird die Brennkammer 4 zusätzlich befeuert, so dass die Temperatur des Heißgasstroms H in der Brennstufe 41 auf die - hier beispielsweise etwa bei ca. 800 °C liegende - Expansionstemperatur erhöht wird. Die in die Brennkammer 4 eingebrachten Brenngutpartikel R werden somit erst dann aufgeschmolzen, wenn sie mit dem Heißgasstrom H in die Brennstufe 41 geblasen werden.

Gemäß Fig. 3 ist die Isolierung 6 abweichend von der vorstehend beschriebenen Ausführungsform der Anlage 1 außenseitig auf die Außenwand 5 des Vertikalofens 2 aufgebracht. Weiterhin erstreckt sich der Kühlspalt 7 nur über den Bereich der Brennstufe 41. Im Bereich der Vorstufe 40 fehlt die Außenwand 5. Der Vertikalofen 2 ist im Bereich der Vorstufe 40 also nur einwandig ausgebildet. Die Isolierung 6 ist hier unmittelbar außenseitig auf den Brennkammermantel 3 aufgebracht.

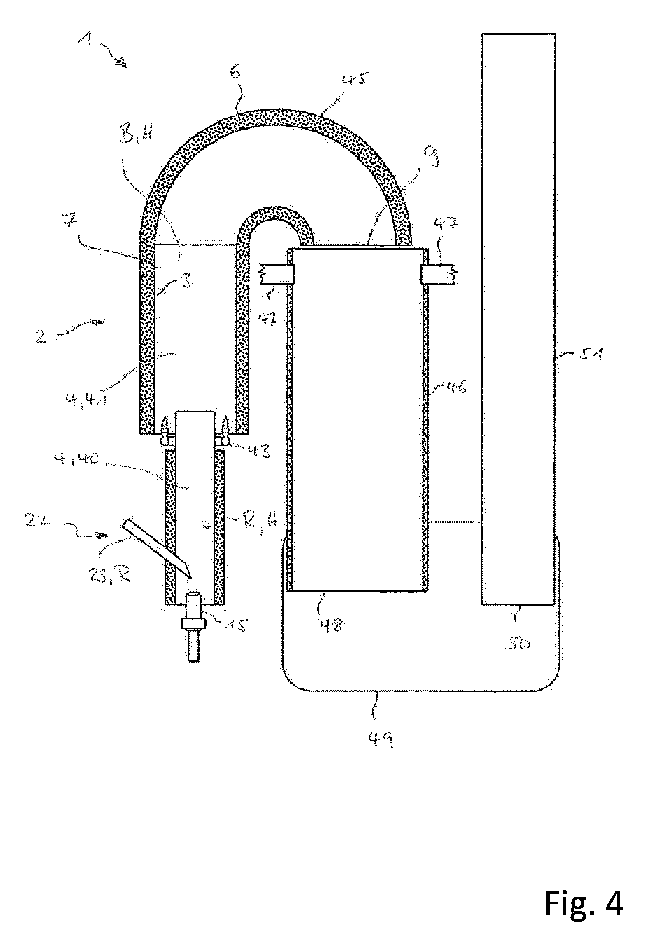

Fig. 4 zeigt eine weiterentwickelte Ausführungsform der Anlage 1 gemäß Fig. 3. Diese unterscheidet sich von der vorstehend beschriebenen Anlagenvariante dadurch, dass an den hohlzylindrischen Brennkammermantel 3 ein Krümmer 45 anschließt, durch den der Heißgasstrom H um etwa 180° umgelenkt wird. Der innerhalb des hohlzylindrischen Teils der Brennkammer 4 nach oben gerichtete Heißgasstrom H verlässt den Krümmer 45 somit mit nach unten weisender Strömungsrichtung.

Abweichend von Fig. 4 schließt an den Krümmer 45 eine Kühlfalle 46 an, in deren oberen Bereich seitlich Kühlluftleitungen 47 münden. Die Blähglaspartikel B treten über den Gasaustritt 9 aus der Brennkammer 4 in die Kühlfalle 46 ein und werden hier unter Wirkung der eingeblasenen Kühlluft K unter die Erweichungstemperatur des Glasmaterials abgeschreckt.

Gemäß Fig. 4 mündet die Kühlfalle 46 in einen Einlass 48 eines - hier schematisch dargestellten - Feststoffabscheiders 49, dessen Auslass 50 zur Ableitung der Ofenabgase mit einem Schornstein 51 verbunden ist.

Bei der Anlage 1 gemäß Fig. 4 werden die Brenngutpartikel R - analog zu der Anlagenvariante gemäß Fig. 3 - in die Vorstufe 40 eingebracht.

Ebenfalls analog zu Fig. 3 ist der Vertikalofen 2 auch in der Ausgestaltung gemäß Fig. 4 in der Brennstufe 41 doppelwandig ausgebildet, um eine Kühlung der Brennkammerwand 3 zu gewährleisten. Die doppelwandige Struktur des Vertikalofens 2 ist in Fig. 4 lediglich aus Vereinfachungsgründen nicht explizit dargestellt.

Die durch den Krümmer 45 bewirkte Umlenkung des Heißgasstroms H hat einerseits den Vorteil, dass hierdurch die Bauhöhe der Anlage 1 vergleichsweise gering gehalten werden kann. Andererseits hat die Umlenkung des Heißgasstroms H auch den Vorteil, dass die mit dem Heißgasstrom H aus der Brennkammer 4 ausgetragenen Blähglaspartikel B in der Kühlfalle 46 mit dem Heißgasstrom H nach unten fallen. Hierdurch wird auf einfache, aber effektive Weise ausgeschlossen, dass Blähglaspartikel B und nicht-expandierte Brenngutpartikel R entgegen der Strömungsrichtung des Heißgasstroms H in die Brennkammer 4 zurückfallen.

Die Erfindung wird an den vorstehend beschriebenen Ausführungsbeispielen besonders deutlich, ist auf diese Ausführungsbeispiele gleichwohl aber nicht beschränkt. Vielmehr können zahlreiche weitere Ausführungsformen der Erfindung aus den Ansprüchen und der vorstehenden Beschreibung abgeleitet werden. Insbesondere kann das Pulsationsventil 19 im Rahmen der Erfindung auch an anderer Stelle, z.B. innerhalb der Sekundärluftleitung 20 oder der Warmluftleitung 24 angeordnet sein.

### Bezugszeichenliste

- 1: Anlage
- 2: Vertikalofen
- 3: Brennkammermantel
- 4: Brennkammer
- 5: Außenwand
- 6: Isolierung
- 7: Kühlspalt
- 8: Kuppel
- 9: Gasaustritt
- 10: Ofenabgasleitung
- 15: Brenner
- 16: Brenngasleitung
- 17: Primärluftleitung
- 18: (Primärluft-)Gebläse
- 19: Pulsationsventil
- 20: Sekundärluftleitung
- 21: (Sekundärluft-)Gebläse
- 22: Beschickungseinrichtung
- 23: Brenngutleitung
- 24: Warmluftleitung
- 30: Pulsationsdrehscheibe
- 31: Elektromotor
- 32: Achse
- 33: Drehachse
- 40: Vorstufe
- 41: Brennstufe
- 42: Brennguteintritt
- 43: Brenngas-Ringverteiler
- 45: Krümmer
- 46: Kühlfalle
- 47: Kühlluftleitungen
- 48: Einlass
- 49: Feststoffabscheiders
- 50: Auslass
- 51: Schornstein

- B: Blähglaspartikel
- K: Kühlluft
- H: Heißgasstrom
- G: Brenngas
- P: Primärluftstrom
- S: Sekundärluftstrom
- R: Brenngutpartikel

## Patentansprüche

1. Verfahren zur Herstellung von mono- oder multizellulär expandierten Partikeln (B) aus einem glasartigen oder keramischen Material, wobei Brenngutpartikel (R) aus einem nicht-expandierten Ausgangsmaterial in eine Brennkammer (4) eines Brennofens (2) eingegeben und unter Wirkung eines pulsierenden Heißgasstroms (H) expandiert werden, wobei zur Erzeugung einer Druckpulsation in dem Heißgasstrom (H) ein Pulsationsventil (19) herangezogen wird, das in einer unmittelbar oder mittelbar mit der Brennkammer (4) verbundenen Luft- oder Gaszuleitung (17) angeordnet ist.

2. Verfahren nach Anspruch 1,
wobei das Pulsationsventil (19) eine Pulsationsdrehscheibe (30) umfasst, die in der Luft- oder Gaszuleitung (17,24) angeordnet ist, wobei die Pulsationsdrehscheibe (30) zur periodischen Variation des Strömungsquerschnitts innerhalb der Luft- oder Gaszuleitung (17,24) um eine quer zu einer Achse der Luft- oder Gaszuleitung (17,24) ausgerichtete Drehachse (33) gedreht wird.

3. Verfahren nach Anspruch 1 oder 2,
wobei unter Heranziehung des Pulsationsventils (19) eine Druckpulsation in einem Luftstrom (P) erzeugt wird, und wobei der pulsierende Luftstrom (P) zur Erzeugung des Heißgasstroms (H) einem Brenner (15) zugeführt wird.

4. Verfahren nach einem der Anspruch 1 bis 3,
wobei der Brennofen (2) doppelwandig ausgebildet sind, so dass zwischen einem die Brennkammer (4) begrenzenden Brennkammermantel (3) und einer diesen umgebenden Außenwand (5) ein Kühlspalt (7) gebildet ist, wobei zur Kühlung des Brennkammermantels (3) in den Kühlspalt (7) Kühlluft (K) eingeleitet wird, und wobei über die Luft- oder Gaszuleitung (17,24) und das darin angeordnete Pulsationsventil (19) aufgewärmte Kühlluft (K) aus dem Kühlspalt (7) abgeleitet wird, um diese aufgewärmte Kühlluft (K) unmittelbar oder mittelbar der Brennkammer (4) zuzuleiten.

5. Verfahren nach einem der Anspruch 1 bis 4,
wobei als Brennofen ein Vertikalofen (2) herangezogen wird, bei dem die Brennkammer (4) eine langgestreckte, hinsichtlich ihrer Längsausdehnung vertikal ausgerichtete Geometrie aufweist.

6. Verfahren nach Anspruch 5,
wobei der pulsierende Heißgasstrom (H) an einem unteren Ende des Vertikalofens (2) in die Brennkammer (4) eingeleitet wird, so dass der Heißgasstrom (H) die Brennkammer (4) von unten nach oben durchläuft.

7. Anlage (1) zur Herstellung von mono- oder multizellulär expandierten Mikropartikeln (B) aus einem glasartigen oder keramischen Material,
- mit einem Brennofen (2), der eine Brennkammer (4) umfasst, in dem ein pulsierender Heißgasstrom (H) erzeugbar ist,
- mit einer Beschickungseinrichtung (22), mittels der die Brennkammer (4) mit zu expandierenden Brenngutpartikeln (R) aus einem nicht-expandierten Ausgangsmaterial beschickbar ist, sowie
- mit einer Luft- oder Gaszuleitung (17), die zur Bildung des Heißgasstroms (H) unmittelbar oder mittelbar mit der Brennkammer (4) verbunden ist,
wobei zur Erzeugung einer Druckpulsation in dem Heißgasstrom (H) in der Luft- oder Gaszuleitung (17,24) ein Pulsationsventil (19) angeordnet ist.

8. Anlage (1) nach Anspruch 7,
wobei das Pulsationsventil (19) eine Pulsationsdrehscheibe (30) umfasst, die in der Luft- oder Gaszuleitung (17,24) angeordnet ist, wobei die Pulsationsdrehscheibe (30) zur periodischen Variation des Strömungsquerschnitts innerhalb der Luft- oder Gaszuleitung (17,24) um eine quer zu einer Achse der Luft- oder Gaszuleitung (17,24) ausgerichtete Drehachse (33) drehangetrieben ist.

9. Anlage (1) nach Anspruche 7 oder 8,
wobei das Pulsationsventil (19) zur Zuführung eines pulsierenden Luftstroms (P) einem die Brennkammer (4) befeuernden Brenner (15) vorgeschaltet ist.

10. Anlage (1) nach einem der Ansprüche 7 bis 9,
wobei der Brennofen (2) doppelwandig ausgebildet sind, so dass zwischen einem die Brennkammer (4) begrenzenden Brennkammermantel (3) und einer diesen umgebenden Außenwand (5) ein Kühlspalt (7) gebildet ist, in den zur Kühlung des Brennkammermantels (3) Kühlluft (K) einleitbar ist, und wobei die Luft- oder Gaszuleitung (17,24) mit dem darin angeordneten Pulsationsventil (19) den Kühlspalt (7) mit der Brennkammer (4) verbindet, so dass über die Luft- oder Gaszuleitung (17,24) und das darin angeordnete Pulsationsventil (19) aufgewärmte Kühlluft (K) aus dem Kühlspalt (7) abgeleitet und unmittelbar oder mittelbar der Brennkammer (4) zugeleitet wird.

11. Anlage (1) nach einem der Ansprüche 7 bis 10,
wobei der Brennofen als Vertikalofen (2) ausgebildet ist, bei dem die Brennkammer (4) eine langgestreckte, hinsichtlich ihrer Längsausdehnung vertikal ausgerichtete Geometrie aufweist.

12. Anlage (1) nach Anspruch 11,
wobei die Luft- oder Gaszuleitung (17,24) zur Erzeugung des Heißgasstroms (H) in aufsteigender Richtung mit einem unteren Ende des Vertikalofens (2) verbunden ist.
